# FASCICULE DE BREVET EUROPEEN

(11) **EP 3 736 176 B1**
(45) Date de publication et mention de la délivrance du brevet: **09.11.2022**
(21) Numéro de dépôt: 20165980.2
(22) Date de dépôt: 26.03.2020
(51) Int. Cl.: B60R 13/04

(54) **DISPOSITIF ANTI-GRAVILLONNAGE RETRACTABLE**
EINZIEHBARE SPLITTERSCHUTZVORRICHTUNG
RETRACTABLE ANTI-CHIPPING DEVICE

(30) Priorité: 07.05.2019 FR 1904773
(43) Date de publication de la demande: 11.11.2020
(73) Titulaire: Renault s.a.s, 92100 Boulogne Billancourt (FR)
(72) Inventeur: CHAPRON, Thibault, 78210 SAINT CYR L'ECOLE (FR)
(74) Mandataire: Renault Group

(56) Documents cités:
- WO-A1-97/26176
- WO-A1-2011/146967
- DE-A1- 19 933 508
- DE-U1-202008 005 885
- US-A- 6 158 756

## Description

### Domaine technique

L'invention concerne le domaine des véhicules automobiles et notamment les châssis pour véhicule automobile.

Par « châssis », on entend tout assemblage de type parallélépipédique supportant le moteur, l'habitacle et la carrosserie d'un véhicule. Le châssis désigne la partie portante inférieure, ou soubassement, sur laquelle repose le plancher et délimitée latéralement par deux flancs latéraux sur lesquels viennent se fixer au moins un dispositif anti-gravillonnage ou bavolet.

On entend par « bavolet », toute pièce montée sur les côtés latéraux du châssis et permettant de réunir le marchepied à la carrosserie du véhicule automobile. Le bavolet protège la carrosserie de projections en provenance du sol lorsque le véhicule circule.

### Techniques antérieures

On connaît des bavolets fixés sur le châssis qui permettent de réaliser une protection permanente du bas de caisse d'un véhicule, notamment contre les projections de gravillons projetés depuis la route sur laquelle circule le véhicule.

L'inconvénient de cette solution inamovible est que le bavolet, parfois très proéminent, gêne la sortie et l'entrée des occupants du véhicule. En particulier, il oblige une grande enjambée car il vient en contact avec la jambe et salit le pantalon, et plus le véhicule est haut, plus le risque est grand de frotter la jambe contre le bavolet et plus le sentiment de mauvaise accessibilité est fort.

On connait également le document US 6 158 756 A qui décrit un véhicule comportant un élément de protection d'un bas de caisse, ce dernier étant mobile par rapport à la caisse mais nécessitant soit l'appui de l'utilisateur soit un entrainement motorisé.

### Exposé de l'invention

L'invention a pour but de proposer un bavolet présentant une structure spécifique qui le rend rétractable lorsqu'il est monté sur un châssis de véhicule.

Au vu de ce qui précède, l'invention a pour objet un véhicule automobile comportant un dispositif d'anti-gravillonnage ou bavolet comprenant une coque, le dispositif étant monté sous une porte du véhicule, et étant monté rotatif sur le châssis du véhicule grâce à des moyens d'assemblage dudit dispositif entre des positions haute et basse lorsque la porte du véhicule est respectivement ouverte et fermée, les moyens d'assemblage comportant un élément de pivot longitudinal à tourillon, le dispositif comportant une tige s'étendant transversalement depuis la coque, un élément de butée d'un panneau intérieur de la porte venant en butée contre une extrémité de la tige lorsque la porte est fermée, de façon à entrainer la rotation du dispositif autour des moyens d'assemblage jusqu'à disposer ce dernier en position haute.

De préférence, le tourillon s'étend longitudinalement sur un bord de la coque.

Par exemple, une tige s'étend transversalement depuis une première extrémité de la coque.

Avantageusement, un aimant est monté sur une seconde extrémité de la coque.

Dans un mode de réalisation, le dispositif comprend un mécanisme de rappel élastique dudit dispositif comprenant des moyens d'attache dudit mécanisme de rappel élastique.

Par exemple, la tige s'étend transversalement depuis une première extrémité de la coque.

De préférence, le mécanisme de rappel élastique du dispositif d'anti-gravillonnage est attaché par ses moyens d'attache au châssis du véhicule.

Selon une forme de réalisation, la coque comporte une surface de protection qui est sensiblement affleurante à une surface d'une porte du véhicule lorsque le dispositif est en position haute et qui vient sous le châssis lorsque le dispositif est en position basse.

Il peut être prévu un aimant de porte qui est engagé magnétiquement avec l'aimant monté sur la seconde extrémité de la coque lorsque le dispositif est dans sa position haute, et qui s'en désengage lorsque le dispositif est dans sa position basse.

### Brève description des dessins

L'invention sera mieux comprise à l'étude détaillée de quelques modes de réalisation pris à titre d'exemples non limitatifs et illustrés par les dessins annexés, sur lesquels :
Fig la représente un véhicule dont le châssis comporte un dispositif anti-gravillonnage.
Fig 1b montre le dispositif la figure la en position haute, portière véhicule fermée.
Fig 1c montre le même dispositif en position basse, portière véhicule ouverte.
Fig 2a représente une coupe transversale au niveau d'une extrémité avant du dispositif en position haute.
Fig 2b représente une coupe transversale au niveau d'une extrémité avant du dispositif en position basse.
Fig 3a représente en coupe transversale un mécanisme de maintien à aimant d'une extrémité arrière du dispositif en position haute.
Fig 3b représente en coupe transversale le mécanisme de maintien de la figure 3a en position haute.
Fig 4a représente en coupe transversale un mécanisme de rappel élastique du dispositif en position haute.
Fig 4b représente en coupe transversale le mécanisme de rappel élastique de la figure 3a en position basse.

### Description détaillée

La Figure la illustre un véhicule automobile sur lequel est monté un dispositif anti-gravillonnage rétractable 1, ou bavolet 1, formé d'une coque étendue longitudinalement le long du véhicule entre une première extrémité P2 dite extrémité avant et une deuxième extrémité P4 dite extrémité arrière. Les extrémités avant et arrière sont orientées selon l'axe longitudinal conventionnel avant-arrière du véhicule. Le bavolet 1 est monté sous une porte 5 du véhicule, par exemple une porte latérale avant ou arrière ou une porte de coffre. La porte 5 peut comprendre des mouvements de coulissement ou de rotation pour son ouverture.

La coque peut être un élément de tôlerie ou être réalisée en matériau plastique. Elle s'étend longitudinalement sur les côtés du soubassement du véhicule pour former les seuils des ouvertures latérales.

Dans la description qui suit, le bavolet 1 est monté sous une porte avant droite de véhicule 5 à titre d'exemple non limitatif.

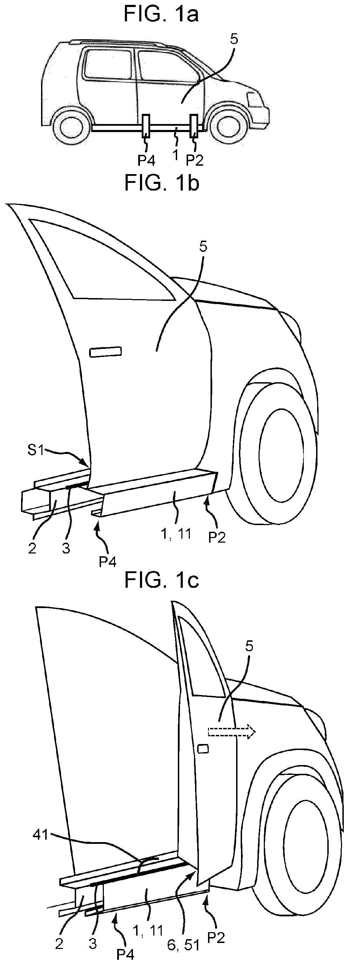

Le bavolet 1 est monté pivotant entre une position haute 11 (figure 1b) et une position basse 12 (figure 1c) sur le châssis 2 du véhicule grâce à des moyens d'assemblage 3 comportant un élément de pivot longitudinal à tourillon s'étendant longitudinalement sur un côté de la coque 1 et logé dans un logement de guidage en rotation prévu sur ledit châssis 2. Les moyens d'assemblage 3 à tourillon assurent une fonction de charnière par rapport au châssis 2.

En se référant aux Figures 1b et 1c, le bavolet 1 comporte une tige 4 s'étendant transversalement depuis la coque. Un élément de butée 6 du panneau intérieur 51 de la porte 5 vient en butée contre une extrémité 41 de la tige 4 lorsque la porte est fermée, ce qui entraîne la rotation du bavolet 1 autour du tourillon 3 jusqu'à ce qu'il soit en position haute 11.

Avantageusement, la tige 4 s'étend depuis l'extrémité avant P2 de la coque, de sorte que la tige 4 et la butée 6 sont situés en regard au plus près de l'axe de pivotement de la porte 5 pour limiter la vitesse de la butée 6 lorsqu'elle entre en contact avec l'extrémité de la tige 41 et pour limiter le bras de levier de la force de réaction de l'extrémité 41 sur la butée 6, qui s'oppose à la fermeture de la porte 5.

A l'ouverture de la porte 5, la butée 6 s'éloigne du châssis 2 et perd le contact avec l'extrémité 41. Le bavolet 1 retombe alors par gravité en position basse 12 en tournant autour du tourillon 3.

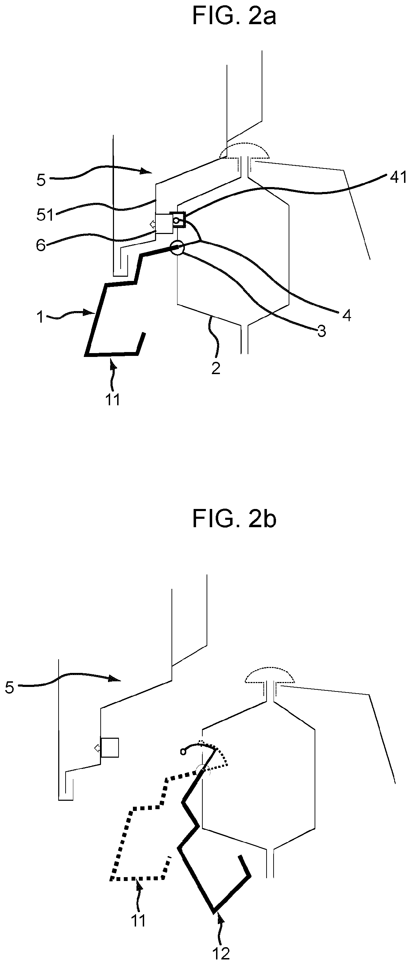

Les Figures 2a et 2b représentent des coupes transversales du bavolet 1 monté sur un châssis 2, au niveau de son extrémité avant P2. Une surface de protection du bavolet 1 est sensiblement affleurante à une surface externe de la porte 5 lorsque le bavolet est en position haute 11, et le bavolet 1 est sous le châssis 2 lorsqu'il est en position basse 12, le rendant donc beaucoup moins proéminent latéralement vers l'extérieur de l'habitacle du véhicule de sorte qu'il ne gêne pas l'enjambée d'un occupant pour en sortir.

La butée 6 peut être en téflon et être clippée sur le panneau intérieur de porte 51.

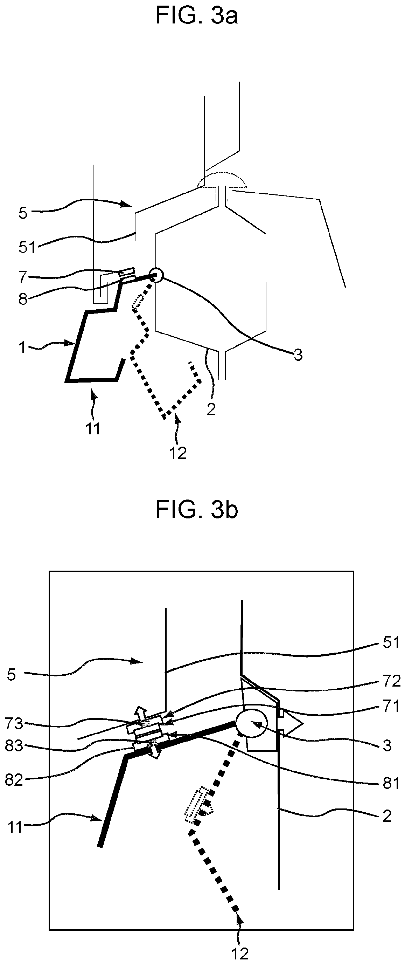

Les Figures 3a et 3b représentent des coupes transversales du bavolet 1 au niveau de son extrémité arrière P4. Il est illustré un mécanisme de maintien du bavolet 1 qui maintient le bavolet 1 à son extrémité arrière P4.

Le mécanisme de maintien permet de garantir de bons jeux et affleurements avec le châssis 2 et d'éviter la vibration de l'extrémité arrière P4 du bavolet 1.

Par exemple, le mécanisme de maintien comporte un jeu de pièces magnétiques 7, 8 dont un premier aimant 71 est monté sur la porte 5 et un deuxième aimant 81 est monté sur la coque en regard de l'aimant de porte 71 lorsque la portière 5 est fermée. L'aimant de porte 71 est engagé magnétiquement avec l'aimant de coque 81 lorsque le bavolet 1 est dans sa position haute 11, et s'en désengage lorsque le bavolet 1 est dans sa position basse 12. Ainsi, lors d'une fermeture de porte 5, les deux aimants se rapprochent et leur coopération magnétique finit de les mettre en contact, en jouant légèrement sur la déformabilité du bavolet 1. Le maintien du bavolet 1 est donc garanti de manière hyperstatique en position à haute porte fermée 11.

Comme illustré en Figure 3b, les pièces magnétiques 7, 8 peuvent être chaussées dans un châssis plastique 72, 82 et les aimants 71 et 81 sont laissés libres en translation par rapport aux châssis plastiques 72, 82 sur une course de l'ordre d'un centimètre et sont rappelés dans leur position rétractée par des ressorts 73, 83 en position basse du bavolet 1.

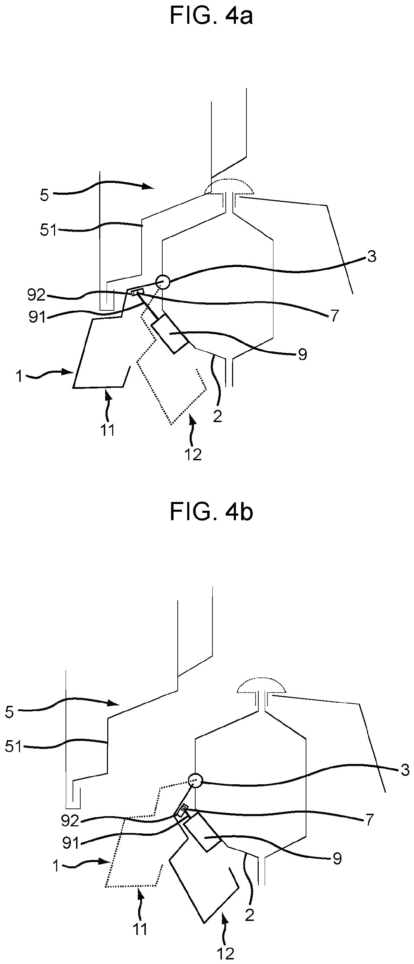

Les Figures 4a et 4b représentent des coupes transversales du bavolet 1 au niveau de son extrémité arrière P4 montrant un mécanisme de rappel élastique 9 en position basse du bavolet 1 qui peut être utilisé en complément d'un mécanisme de maintien 7, 8 du bavolet 1.

Par exemple, le mécanisme de rappel 9 comporte un élément support qui est fixé au châssis 2 et qui retient un élément de rappel élastique 91, par exemple un ressort, lié par des moyens d'attache 92 à la coque du bavolet 1. L'ajustement de la raideur du ressort 91 permet de choisir la vitesse de rétractation du bavolet 1 lors de l'ouverture de la porte 5.

Les moyens d'attache 92 peuvent comprendre un pion dans une rainure. Ils peuvent également comporter un aimant 7 coopérant avec un aimant de porte 8.

On assure ainsi un retour en position basse 12 du bavolet 1 dès que la porte 5 est ouverte et que la butée 6 n'appuie plus sur la tige 4.

Ainsi, on réalise un bavolet 1 complètement intégré à la structure et à la carrosserie du véhicule, dont la rétractation et le déploiement sont entièrement mécaniques et accomplis automatiquement lors des ouvertures et fermetures d'une porte 2.

## Revendications

1. Véhicule automobile comportant un dispositif d'anti-gravillonnage (1) ou bavolet (1) comprenant une coque, le dispositif étant monté sous une porte (5) du véhicule, et étant monté rotatif sur le châssis (2) du véhicule grâce à des moyens d'assemblage (3) dudit dispositif (1) entre des positions haute (11) et basse (12) lorsque la porte (5) du véhicule est respectivement ouverte et fermée, les moyens d'assemblage (3) comportant un élément de pivot longitudinal à tourillon, **caractérisé en ce que** le dispositif comporte une tige (4) s'étendant transversalement depuis la coque, un élément de butée (6) d'un panneau intérieur (51) de la porte (5) venant en butée contre une extrémité (41) de la tige (4) lorsque la porte est fermée, de façon à entrainer la rotation du dispositif (1) autour des moyens d'assemblage (3) jusqu'à disposer ce dernier en position haute (11).

2. Véhicule automobile selon la revendication 1, dans lequel le tourillon (3) s'étend longitudinalement sur un bord de la coque (1).

3. Véhicule automobile selon l'une quelconque des revendications précédentes, comportant un aimant (81) monté sur une seconde extrémité (P4) de la coque (1).

4. Véhicule automobile selon l'une quelconque des revendications précédentes, comportant un mécanisme de rappel élastique (9) dudit dispositif (1) comprenant des moyens d'attache (92) dudit mécanisme de rappel élastique (9).

5. Véhicule selon la revendication 4, dans lequel le mécanisme de rappel élastique (9) du dispositif d'anti-gravillonnage (1) est attaché par ses moyens d'attache (92) au châssis (2) du véhicule.

6. Véhicule selon l'une quelconque des revendications précédentes, dans lequel une tige (4) s'étend transversalement depuis une première extrémité (P2) de la coque.

7. Véhicule selon l'une quelconque des revendications précédentes, dans lequel la coque comporte une surface de protection qui est sensiblement affleurante à une surface d'une porte du véhicule lorsque le dispositif (1) est en position haute (11) et qui vient sous le châssis (2) lorsque le dispositif (1) est en position basse (12).

8. Véhicule selon l'une quelconque des revendications précédentes, dans lequel un aimant de porte (71) est engagé magnétiquement avec l'aimant (81) monté sur la seconde extrémité (P4) de la coque (1) lorsque le dispositif (1) est dans sa position haute (11), et s'en désengage lorsque le dispositif (1) est dans sa position basse (12).

## Patentansprüche

1. Kraftfahrzeug, welches eine Splitterschutzvorrichtung (1) oder ein Abschirmblech (1) aufweist, die bzw. das eine Schale umfasst, wobei die Vorrichtung unter einer Tür (5) des Fahrzeugs angebracht ist und am Rahmen (2) des Fahrzeugs mithilfe von Verbindungsmitteln (3) der Vorrichtung (1) drehbeweglich zwischen einer hohen (11) und einer niedrigen Position (12) gelagert ist, wenn die Tür (5) des Fahrzeugs geöffnet bzw. geschlossen ist, wobei die Verbindungsmittel (3) ein sich längs erstreckendes Schwenkelement mit einem Drehzapfen aufweisen, **dadurch gekennzeichnet, dass** die Vorrichtung eine Stange (4) aufweist, die sich von der Schale aus in Querrichtung erstreckt, wobei ein Anschlagelement (6) einer Innenverkleidung (51) der Tür (5) an einem Ende (41) der Stange (4) zur Anlage kommt, wenn die Tür geschlossen wird, um die Drehung der Vorrichtung (1) um die Verbindungsmittel (3) herbeizuführen, bis diese in der hohen Position (11) angeordnet ist.

2. Kraftfahrzeug nach Anspruch 1, wobei sich der Drehzapfen (3) an einem Rand der Schale (1) in Längsrichtung erstreckt.

3. Kraftfahrzeug nach einem der vorhergehenden Ansprüche, welches einen Magnet (81) aufweist, der an einem zweiten Ende (P4) der Schale (1) angebracht ist.

4. Kraftfahrzeug nach einem der vorhergehenden Ansprüche, welches einen Mechanismus zur elastischen Rückstellung (9) der Vorrichtung (1) aufweist, der Mittel zur Befestigung (92) des elastischen Rückstellmechanismus (9) umfasst.

5. Fahrzeug nach Anspruch 4, wobei der Mechanismus zur elastischen Rückstellung (9) der Splitterschutzvorrichtung (1) durch seine Befestigungsmittel (92) am Rahmen (2) des Fahrzeugs befestigt ist.

6. Fahrzeug nach einem der vorhergehenden Ansprüche, wobei sich eine Stange (4) von einem ersten Ende (P2) der Schale aus in Querrichtung erstreckt.

7. Fahrzeug nach einem der vorhergehenden Ansprüche, wobei die Schale eine Schutzoberfläche aufweist, welche im Wesentlichen mit einer Fläche einer Tür des Fahrzeugs bündig ist, wenn sich die Vorrichtung (1) in der hohen Position (11) befindet, und welche unter den Rahmen (2) gelangt, wenn sich die Vorrichtung (1) in der niedrigen Position (12) befindet.

8. Fahrzeug nach einem der vorhergehenden Ansprüche, wobei ein Türmagnet (71) mit dem Magneten (81) magnetisch zusammenwirkt, der am zweiten Ende (P4) der Schale (1) angebracht ist, wenn sich die Vorrichtung (1) in ihrer hohen Position (11) befindet, und sich von ihm löst, wenn sich die Vorrichtung (1) in ihrer niedrigen Position (12) befindet.

## Claims

1. Motor vehicle having an anti-stone-chipping device (1) or sill (1) comprising a shell, the device being mounted under a door (5) of the vehicle, and being mounted rotatably on the chassis (2) of the vehicle, by virtue of joining means (3) of said device (1), between a top position (11) and a bottom position (12) when the door (5) of the vehicle is open and closed, respectively, the joining means (3) having a longitudinal pivot element with a journal, **characterized in that** the device has a rod (4) extending transversely from the shell, a stop element (6) of an interior panel (51) of the door (5) butting against one end (41) of the rod (4) when the door is closed, so as to rotate the device (1) about the joining means (3) until the latter reaches the top position (11).

2. Motor vehicle according to Claim 1, wherein the journal (3) extends longitudinally over one edge of the shell (1).

3. Motor vehicle according to either one of the preceding claims, having a magnet (81) mounted on a second end (P4) of the shell (1).

4. Motor vehicle according to any one of the preceding claims, having an elastic return mechanism (9) for elastically returning said device (1), comprising fastening means (92) for fastening said elastic return mechanism (9).

5. Vehicle according to Claim 4, wherein the elastic return mechanism (9) of the anti-stone-chipping device (1) is fastened by its fastening means (92) to the chassis (2) of the vehicle.

6. Vehicle according to any one of the preceding claims, wherein a rod (4) extends transversely from a first end (P2) of the shell.

7. Vehicle according to any one of the preceding claims, wherein the shell has a protective surface which is substantially flush with a surface of a door of the vehicle when the device (1) is in the top position (11) and which moves under the chassis (2) when the device (1) is in the bottom position (12).

8. Vehicle according to any one of the preceding claims, wherein a door magnet (71) is magnetically engaged with the magnet (81) mounted on the second end (P4) of the shell (1) when the device (1) is in its top position (11), and is disengaged therefrom when the device (1) is in the bottom position (12).
